# EUROPEAN PATENT APPLICATION

(11) **EP 1 155 646 A1**
(43) Date of publication of application: **21.11.2001**
(21) Application number: 01112352.8
(22) Date of filing: 21.05.2001
(51) Int. Cl.: A47J 31/40

(54) **System for preparing a liquid product for alimentary use**

(30) Priority: 19.05.2000 IT MO000103
(71) Applicant: ALICE CLUB S.a.s. di Pasquini Mario e C., 41015 Nonantola (IT)
(72) Inventor: Pasquini, Mario, 41013 Castelfranco Emilia (IT)
(74) Representative: Luppi, Luigi

(57) **Abstract**

A system for preparing a beverage with a product to be dissolved, such as soluble and/or lyophilised powders, comprises a support (1) for supporting a container (2) suitable for containing said beverage, pouring means of said powdery product suitable for pouring the product into said container (2), further pouring means of diluting liquid suitable for pouring the diluting liquid into said container (2), said further pouring means comprising a pouring body (3) suitable for pouring at least one jet (14; 15) of said diluting liquid into said container (2), said pouring body (3) being provided with a shank (7) rotated around an axis (A) thereof by motor means (5, 6), said at least one jet (14; 15) of diluting liquid being oriented along a direction not coinciding with the direction of said axis (A).

## Description

The invention relates to a system for preparing a liquid product, in particular a system for preparing hot and/or cold beverages, or liquid food, for human or animal alimentary use, by mixing a product, typically made of soluble and/or lyophilised powder, with a diluting liquid, for example, water, coffee, milk, syrups, etc.

From prior art automatic dispenser machines for dispensing beverages are known, comprising a plurality of containers in which powdery soluble and/or lyophilised products are stored, for preparing the above-mentioned beverages. The beverages are prepared by introducing an amount of powdery product into a bowl communicating at the bottom with a mixing chamber, from which a pouring duct starts said duct being suitable for pouring the beverage to be supplied. A liquid, for example water, milk or other, is then introduced into the mixing chamber and is mixed with the powdery product by means of a rotor arranged inside said mixing chamber. The beverage so obtained is poured into a cup placed below the outlet end of the pouring duct.

This type of machine has the drawback that dissolution of the soluble product in the mixing chamber and subsequent transfer thereof along the pouring duct cause the assembly of cup, chamber and pouring ducts for pouring the beverages to rapidly become encrusted by residues of the respective product. Therefore it is necessary to frequently wash such assembly, by starting up a suitable washing cycle provided in said machines. Furthermore, the product residues remaining into the cup, the chamber and the pouring ducts, in particular during periods in which the machine is not used, for example during the night, or during the week-ends, may cause fermentation phenomena absolutely undesirable from a hygienic point of view.

From this fact originates the requirement, provided by regulations, of providing periodical replacements of the bowl, the chamber, the rotor contained therein and the pouring ducts with corresponding hygienised components. Such replacements involve an onerous use of time and manpower.

The present invention aims to solve the above-mentioned drawbacks.

According to the present invention a system for preparing a liquid product is provided, comprising a support for supporting a container suitable for containing said liquid product and initially containing a product to be diluted, diluting liquid pouring means suitable for pouring said diluting liquid into said container, said pouring means comprising a pouring body suitable for pouring at least a jet of said diluting liquid into said container, characterised in that said pouring body is coupled with rotating means arranged for rotating said pouring body around an axis thereof and in that inside said pouring body an inlet duct for said diluting liquid is obtained substantially extending along said axis.

Preferably the product to be diluted is a soluble powdery product and/or a lyophilised product.

Owing to the invention, the product to be diluted and the diluting liquid come in contact with each other only inside the container, for example a cup, suitable for containing the beverage to be drunk.

Furthermore, hygiene of the system is remarkably improved while maintenance requirements are reduced.

The quality of mixing is furthermore optimal, involving a perfect dissolution of the powdery and/or lyophilised product and in particular of the sugary portions contained therein.

Furthermore, since the pouring body is rotatable and the jets of liquid are poured along a misaligned direction with respect to the rotation axis of the pouring head, the jets of liquid rotate with respect to the cup, so stirring the beverage being prepared, which causes the powdery product to be perfectly dissolved into the diluting liquid.

An embodiment of the invention will be shown here below, for merely exemplifying and not restrictive purpose, with reference to the attached drawings, in which:

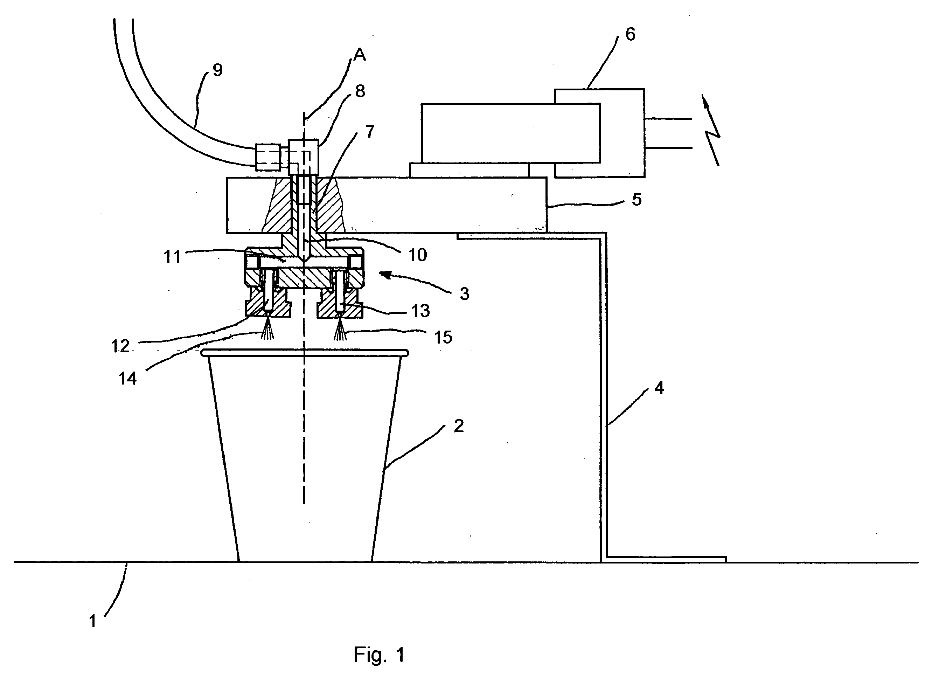

Figure 1 is a partially sectioned sketched view of a system for the preparation of beverages according to the invention, suitable for being used,' for example, in an automatic dispenser machines for dispensing beverages;

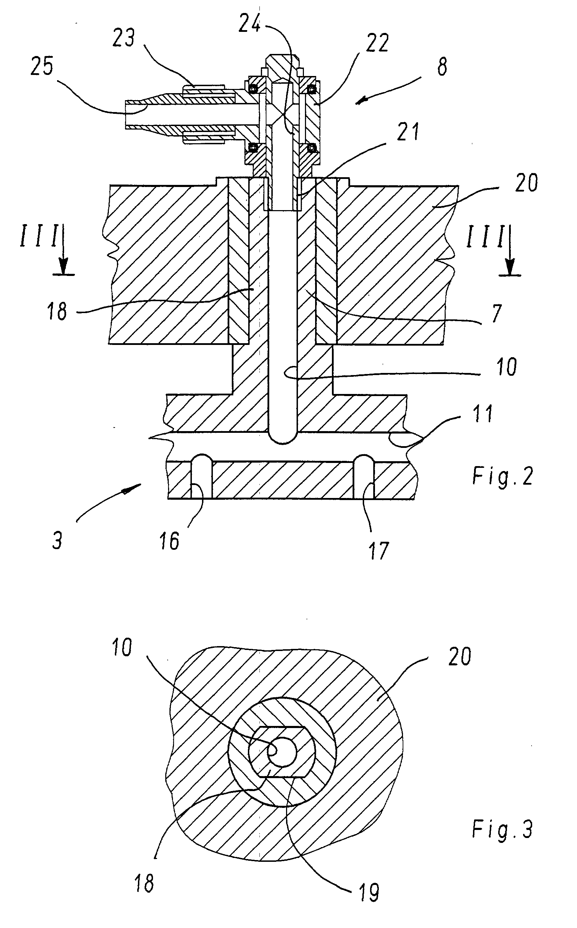

Figure 2 is a longitudinal enlarged section of a pouring group for pouring a diluting liquid into the system of Figure 1;
Figure 3 is a broken and enlarged section taken along plane III-III of Figure 2.

The system comprises a support 1 on which a container 2, for example a cup, suitable for containing the beverage to be prepared may be placed.

Above the cup 2 pouring means 3 for pouring a diluting liquid of a powdery substance for preparing the beverage is arranged, said powdery substance being introduced into the cup 2 by further pouring means, not shown. The pouring means comprises a pouring body 3 inside which an inlet duct 10, through which the liquid to be poured is introduced into the pouring body 3 and a distributing duct 11, communicating with said inlet duct 10, for distributing the liquid to a first pouring nozzle 12 and a second pouring nozzle 13, through which the liquid is supplied into the cup 2 in two jets 14 and 15, are obtained. The pouring nozzles 12 and 13 are inserted into respective seats 16 and 17 of the pouring body 3, communicating with said distributing duct 11.

The pouring body 3 is provided with a shank 7, which is provided with an end section 18 having prismatic section, suitable for coupling with a corresponding prismatic seat 19 obtained in the hub 20 of a driven gear wheel of a gear reducer 5, driven by an electric motor 6. When the motor 6 is actuated, the shank 7 is rotated around an axis A thereof, so causing the pouring body 3 to rotate together with the shank.

The inlet duct 10 extends inside the shank 7, along the whole length of the shank and is connected, through a rotating joint 8, with a supply duct 9 of said liquid.

The rotating joint 8 comprises a first fixed portion 21 screwed into an end section of the inlet duct 10 of the pouring body 3 and a second movable portion 22 rotatably coupled with said first portion 21. The second movable portion 22 is provided with connecting means 23 for said supply duct 9. Said first fixed portion 21 and said second movable portion 22 are internally provided with respective connecting ducts 24 and 25, communicating with each other, through which the supply duct 9 communicates with the inlet duct 10.

The first pouring nozzle 12 has an axis inclined with respect to the rotation axis A of the shank 7, so that the jet 14 generated by the first pouring nozzle 12 is inclined with respect to said axis A. the second pouring nozzle 13, on the contrary, has an axis substantially parallel to the rotation axis A, so as to generate a jet 15 of liquid substantially parallel to said axis.

The shank 7, rotated by the reducer 5, 6 causes the pouring body 3 to rotate therewith, so that the two jets 14 and 15 rotate generating a stirring action inside the cup 2 and promoting dissolution of the powdery preparation into the diluting liquid. The inclination of the jet 14 generated by the first pouring nozzle 12 increases the above-mentioned stirring action.

Obviously the product to be dissolved may be also manually poured into the cup 2.

In practice, materials, dimensions and constructive details, may be different from, but technically equivalent to those described without departing from the scope of the present invention.

## Claims

1. System for preparing a liquid product, comprising a support (1) for supporting a container (2) suitable for containing said liquid product and initially containing a product to be diluted, diluting liquid pouring means suitable for pouring said diluting liquid into said container (2), said pouring means comprising a pouring body (3) suitable for pouring at least a jet (14; 15) of said diluting liquid into said container (2), **characterised in that** said pouring body (3) is coupled with rotating means (5, 6) arranged for rotating said pouring body (3) around an axis (A) thereof and **in that** inside said pouring body (3) an inlet duct (10) for said diluting liquid is obtained substantially extending along said axis (A).

2. System according to claim 1, wherein said at least one jet (14; 15) of diluting liquid is oriented along a direction not coinciding with the direction of said axis (A).

3. System according to claim 1, or 2, wherein said body is provided with a shank (7) coupled with said rotating means (5, 6).

4. System according to any one of the preceding claims, wherein said rotating means (5, 6) comprises a gear reducer (5).

5. System according to claim 3, or 4, wherein said shank (7) is provided with an end portion (18) having prismatic section, which engages a corresponding seat (19) having prismatic section obtained in a hub (20) of a driven wheel of said rotating means (5,6).

6. System according to any one of the preceding claims, wherein said inlet duct (10) communicates with a distributing duct (11) through which said diluting liquid is supplied to pouring means (12, 13) suitable for pouring said at least one jet (14, 15) of said liquid.

7. System according to claim 6, wherein said pouring means comprises at least one nozzle (12, 13) whose axis is oriented along a direction not coinciding with the direction of said axis (A).

8. System according to claim 7, wherein said at least one nozzle (12, 13) comprises a first nozzle (12) and a second nozzle (13).

9. System according to claim 8, wherein said first nozzle (12) is shaped so as to generate a jet (14) of said diluting liquid oriented along a direction inclined with respect to said axis (A).

10. System according to claim 7, or 8, wherein said second nozzle (13) is shaped so as to generate a jet (15) of said diluting liquid along a direction parallel to said axis (A).

11. System according to any one of the preceding claims, wherein said inlet duct (10) is connected with a supply duct (23) of said diluting liquid through rotating joint means (8).

12. System according to claim 11, wherein said rotating joint means comprises a first fixed portion (21) coupled with an end of said inlet duct (10) and a second movable portion (22) rotatably coupled with said first fixed portion (21).

13. System according to claim 12, wherein said second movable portion (22) is provided with connecting means (23) suitable for coupling with an end of said supply duct (9).

14. System according to claim 12, or 13, wherein said first fixed portion (21) and said second movable portion (22) are provided with respective connecting ducts (24, 25), communicating with each other, suitable for causing said supply duct (9) to communicate with said inlet duct (10).

15. System according to any one of the preceding claims, wherein said pouring body (3) in obtained in one piece.

16. System according to any one of the preceding claims and further comprising further pouring means arranged for pouring said product to be dissolved into said container (2).
